Europäisches Patentamt

European Patent Office

Office européen des brevets

(11) Veröffentlichungsnummer: **0 091 400**

A1

(12) # EUROPÄISCHE PATENTANMELDUNG

(21) Anmeldenummer: 83810122.8

(22) Anmeldetag: 24.03.83

(51) Int. Cl.³: **B 23 K 26/04**

(30) Priorität: 02.04.82 CH 2045/82
06.04.82 CH 2122/82

(43) Veröffentlichungstag der Anmeldung:
12.10.83 Patentblatt 83/41

(84) Benannte Vertragsstaaten:
CH DE FR GB IT LI

(71) Anmelder: GRETAG Aktiengesellschaft
Althardstrasse 70
CH-8105 Regensdorf(CH)

(72) Erfinder: Kunz, Rino Ernst, Dr.
Im Schibler 18
CH-8162 Steinmaur(DE)

(72) Erfinder: Tuor, Marcel Franz
Oberdorfstrasse 17
CH-8153 Rümlang(CH)

(74) Vertreter: Pirner, Wilhelm et al,
Patentabteilung der CIBA-GEIGY AG Postfach
CH-4002 Basel(CH)

(54) Verfahren und Vorrichtung zur Fokussierung eines kohärenten Lichtstrahls.

(57) Zur Fokussierung des Laserstrahls (3) wird das sogenannte "Speckling" ausgenützt, welches sich in einer mehr oder weniger grobkörnigen räumlichen Intensitätsverteilung des vom beleuchteten Fleck rückgestreuten Lichts (4) äussert. Das Streulicht (4) wird dazu visuell oder vorzugsweise via fotoelektrische Mittel (7, 8, 9) beobachtet und die Fokuseinstellung solange geändert, bis die Granulierung des Streulichts am gröbsten wird und damit der Zustand bester Fokussierung gefunden ist. Die Fokuseinstellung kann dabei von Hand oder auch in einem geschlossenen Regelkreis automatisch erfolgen. Die Methode ist einfach, benötigt kein Fremdlicht, ist unempfindlich und unkritisch bezüglich Justierung.

Fig. 3

- 1 -

9-13874/ 1+2 /=

Verfahren und Vorrichtung zur Fokussierung eines
kohärenten Lichtstrahls

Die Erfindung betrifft ein Verfahren und eine Vorrichtung zur
Fokussierung eines kohärenten Lichtstrahls (Laserstrahls) auf
die Oberfläche eines Objekts gemäss Oberbegriffen der unabhängigen
Patentansprüche.

Für optische Bearbeitungsvorrichtungen, die mit kohärenten Lichtstrahlen hoher Energiedichte, sog. Laserstrahlen arbeiten, ist es
von grösster Wichtigkeit, dass der Bearbeitungslichtstrahl exakt auf
die zu bearbeitende Oberfläche des Werkstücks fokussiert ist,
um die Lichtleistung auf einen möglichst kleinen Fleck zu konzentrieren.

Das Problem der Laserstrahl-Fokussierung wurde schon von verschiedenen
Seiten angegangen, vgl. z.B. DE-A-30 21 622, DE-A-30 36 343,
DE-A-24 53 364, DE-A-20 34 341, DE-A-30 44 416, DE-A-26 52 814,
US-A-36 89 159, US-A-38 93 129, US-A-42 42 152; F.M. Mottier,
SPIE 220, 95-100 (1980). Diese bekannten Methoden haben jedoch alle
spezifische Nachteile, die ihre praktische Realisierung und Anwendung
in Bearbeitungsmaschinen zumindest nur bedingt und mit Einschränkungen
zulassen.

Die wichtigsten Anforderungen an eine in der Praxis wirklich einsatzfähige Fokussiermethode sind
- einfache Anordnung
- keine Fremdlichtquelle
- Funktionsfähigkeit sowohl für plane als auch für nicht-plane Oberflächen

- 2 -

- tatsächliche Minimalisierung des Fleckdurchmessers
  (und nicht nur Verstellung des Werkstücks in eine Sollposition)
- Unempfindlichkeit auf kleine Aenderungen der Messanordnung
  und Parameter des Laserstrahls
- Unkritische Justierung und
- Fokussierung ohne Bearbeitung des Werkstücks.

Durch die vorliegende Erfindung sollen nun ein Verfahren und eine
Vorrichtung zum Fokussieren eines Laserstrahls geschaffen werden,
welche allen diesen Anforderungen genügen.

Das erfindungsgemässe Verfahren und die entsprechende Vorrichtung
sind in den unabhängigen Patentansprüchen beschrieben. Vorteilhafte
Ausgestaltungen und Varianten ergeben sich aus den abhängigen
Ansprüchen.

Die Erfindung basiert somit auf der bekannten physikalischen Erscheinung des sog. "Specklings", welche z.B. in den folgenden
Literaturstellen näher beschrieben ist:

R.K. Erf:          "Speckle Metrology", Academic Press (1978)
J.C. Dainty:       "Laser Speckle and Related Phenomena"
                   Springer Verlag (1975)
K.A. Stetson:      "A Review of Speckle Photography and Interferometry"
                   Opt. Eng. 14, 482 (1975)
J.C. Dainty:       "The Statistics of Speckle Patterns" in
                   "Progress in Optics", Vol. 14, pp 3-46 (1976).

Die bisher bekannten Hauptanwendungen der "Speckle"-Methoden sind
die Charakterisierung von Oberflächen und die Messung von Deformationen und Verschiebungen von Testobjekten. Im Zusammenhang mit der
Fokussierung von Laserstrahlen wurden Speckle-Methoden bisher jedoch
noch nicht erwähnt.

Im folgenden wird die Erfindung anhand der Zeichnung näher erläutert:
Es zeigen

Fig. 1 und 2   je ein Prinzipschema von zwei beispielsweisen optischen
          · . Anordnungen zum erfinungsgemässen Fokussierverfahren und

Fig. 3         ein Prinzipschema eines Ausführungsbeispiels einer erfindungsgemässen Vorrichtung.

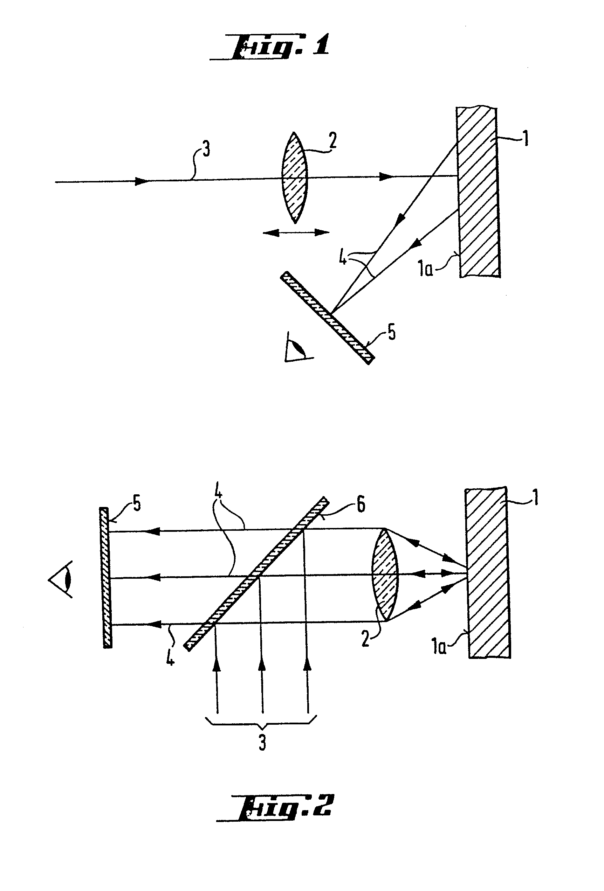

In der einfachsten Anordnung gemäss Fig. 1 wird die Oberfläche 1a des
zu bearbeitenden Objekts oder Werkstücks 1 mit einem mittels einer
Fokussieroptik 2 fokussierten kohärenten Lichtstrahl, einem sog.
Laserstrahl 3 beaufschlagt und das von der Objektoberfläche 1a
zurückgestreute Licht 4 auf einem seitlich angeordneten Schirm 5 aufgefangen.

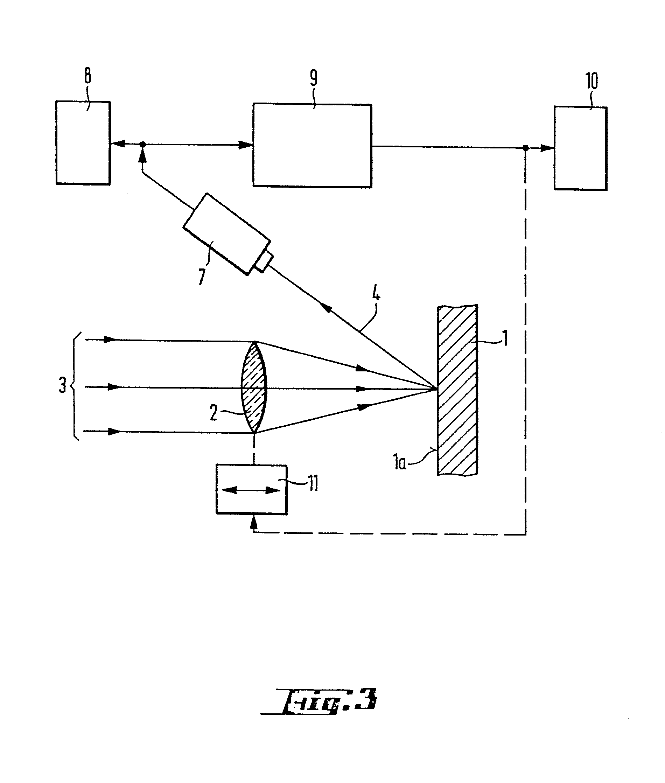

In der Ausführung gemäss Fig. 2 gelangt der Laserstrahl 3 über einen
halbdurchlässigen Spiegel 6 und die Fokussieroptik 2 auf die Objektoberfläche 1a, und das rückgestreute Licht 4 tritt ebenfalls durch
den Spiegel 6 auf den Schirm 5.

Die auf dem Schirm 5 beobachtete Intensitätsverteilung des vom beleuchteten Fleck des Objekts 1 zurückgestreuten Lichts 4 weist eine
Granulierung mit statistisch verteilten hellen und dunklen Flecken
auf. Diese Granulierung, welche im allgemeinen mit dem englischen
Ausdruck "Speckle" oder "Speckling" bezeichnet wird, rührt von der
praktisch immer eine gewisse (optische) Rauheit aufweisenden Oberfläche 1a des Objekts 1 her, welche die Phase der beleuchtenden Lichtwelle statistisch räumlich moduliert ("optisches Rauschen"). Die Grösse
der einzelnen hellen und dunklen Flecken, also die Grobheit bzw.
Feinheit der Granulierung hängt von der Grösse des beleuchteten
Flecks auf der Objektoberfläche ab und ist umso grösser (Granulierung
gröber), je kleiner die beleuchtete Fläche ist.

Die Erfindung macht sich nun dieses Phänomen zunutze, indem sie die Speckle-Struktur als Indikator für die Fokussierung heranzieht. Da die Kleinheit des beleuchteten Flecks unmittelbar mit der Fokussierung zusammenhängt (ideale Fokussierung $\triangleq$ Fleckdurchmesser minimal), wird nun erfindungsgemäss unter Beobachtung der Granulierung bzw. Speckles auf dem Schirm 5 die Fokussierung solange verstellt, bis die Granulierung am gröbsten ist. Es versteht sich, dass während dieser Einstellung die Intensität bzw. Leistung des Laserstrahls soweit reduziert ist, dass keine ungewollte Bearbeitung der Werkstück-Oberfläche 1a erfolgt.

Bei Verwendung von sichtbarem Licht ist die direkte visuelle Beobachtung der Speckles auf dem Schirm 5 gut möglich, universeller und vorteilhafter ist jedoch die Beobachtung mit fotoelektrischen Mitteln und anschliessende Auswertung der dabei entstehenden elektrischen Signale. Die Fig. 3 zeigt eine schematische Darstellung einer dazu geeigneten Vorrichtung.

Der Laserstrahl 3 trifft wiederum über die Fokussieroptik 2 auf die Werkstück-Oberfläche 1a auf und wird dort zurückgestreut. Das Streulicht 4 wird von einer Fernsehkamera 7 empfangen, welche an einen Fernseh-Monitor 8 und an eine Auswerteeinrichtung 9 angeschlossen ist. Die Fernsehkamera 7 ist ein handelsüblicher Typ, dessen Objektiv entfernt ist, sodass das Streulicht direkt auf die Fernsehröhre auftrifft. Anstatt das Objektiv ganz zu entfernen, kann es in gewissen Fällen auch vorteilhaft sein, das Objektiv nur stark zu defokussieren.

Die Kamera 7 tastet das vom beleuchteten Fleck erzeugte Speckle-Muster zeilenweise ab und erzeugt ein entsprechendes Videosignal, das zusätzlich noch die üblichen Synchronisier-Impulse enthält. Das von der Kamera 7 aufgenommene Speckle-Bild wird auf dem Monitor 8 zur optischen Kontrolle sichtbar gemacht.

- 5 -

Die Auswerteeinrichtung 9 benutzt nun direkt das von der Kamera erzeugte Video-Signal, um den Zustand optimaler Fokussierung zu erkennen und ein entsprechendes Ausgangssignal zu erzeugen, welches dann auf einer Anzeige 10 in geeigneter Weise angezeigt wird.

Als Mass für die Grobheit des Speckle-Bilds kann z.B. die Anzahl der Hell-Dunkel-Uebergänge pro Bildzeile herangezogen werden. Somit braucht also für die Fokussierung nur die Anzahl dieser Uebergänge gemessen und durch entsprechendes Verschieben der Fokussieroptik 2 (oder des Werkstücks 1) minimalisiert zu werden.

Zur Auswertung des Videosignals in diesem Sinne werden zunächst die Synchronisier-Impulse eliminiert und dann die Signalamplitude mittels eines Schmitt-Triggers mit einem Referenz-Pegel verglichen, der aus dem Mittelwert des Signals über eine oder mehrere Bildzeilen gewonnen und laufend nachgeführt wird. Das vom Schmitt-Trigger dabei erzeugte Rechteck-Signal wird dann in eine entsprechende Spannung umgewandelt und angezeigt, wobei das Spannungsminimum dem Zustand bester Fokussierung entspricht. Präzision und Störsicherheit der Auswertung können erhöht werden, indem das Signal vor dem Schmitt-Trigger mittels geeigneter Uebertragungsglieder (Bandpass, Differenzier-Glied) umgeformt wird.

Vorstehend wurde lediglich eine einfache Möglichkeit der fotoelektrischen Speckle-Beobachtung und Auswertung erläutert. Selbstverständlich kann die Analyse des Speckle Bilds noch auf zahlreiche andere Arten erfolgen. Beispielsweise ist es ohne weiteres möglich, die Abtastung des Speckle-Bilds statt mit einer Fernseh-Röhre oder allgemein einer zweidimensionalen, flächigen Fotoempfänger-Anordnung auch nur längs einer einzigen Bildzeile z.B. mittels einer linearen Fotodioden-Anordnung oder im Extremfall sogar nur mittels einer einzigen Fotodiode abzutasten. Wesentlich ist lediglich, dass die mit dem Fokussierungszustand ändernde räumliche Intensitätsmodulation des gestreuten Lichts in irgendeiner Weise quantifiziert und gegebenenfalls angezeigt wird. Weiters ist es auch möglich, die Fokussierung nicht direkt solange zu verändern, bis sich das gröbste Speckle-Muster einstellt, sondern den Verlauf der Grobheit des Speckle-Musters bei mehreren Fokus-Einstellungen zu verfolgen und daraus auf rechnerischem Wege die beste Fokuseinstellung zu ermitteln und dann manuell oder automatisch einzustellen.

Abgesehen von der bequemeren und vor allem genaueren Beobachtung der Speckle hat die fotoelektrische Auswertung derselben gegenüber der visuellen Beobachtung den Vorteil, dass die Wellenlänge des Laserstrahls nicht im sichtbaren Bereich des Spektrums zu liegen braucht. Ferner kommt noch hinzu, dass die Auswerteeinrichtung 9 mit einer Regeleinrichtung zu einem geschlossenen Regelkreis für die vollautomatische Fokussierung zusammengeschaltet werden kann.

Patentansprüche

1. Verfahren zur Fokussierung eines kohärenten Lichtstrahls, insbesondere eines Laserstrahls, auf die Oberfläche eines Objekts, wobei das Objekt mit dem kohärenten Lichtstrahl beaufschlagt wird, dadurch gekennzeichnet, dass die Intensität des Lichtstrahls soweit herabgesetzt wird, dass keine Bearbeitung des Objekts stattfindet, dass die Granulierung (Speckling) des von der Oberfläche des Objekts zurückgestreuten Lichts beobachtet wird und dass die Fokussierung anhand der Grobheit der Granulierung eingestellt wird.

2. Verfahren nach Anspruch 1, dadurch gekennzeichnet, dass die Fokussierung auf maximale Grobheit der Granulierung eingestellt wird.

3. Verfahren nach Anspruch 1, dadurch gekennzeichnet, dass aus dem Verlauf der Grobheit der Granulierung die Fokuseinstellung grösster Grobheit errechnet und dann eingestellt wird.

4. Verfahren nach einem der Ansprüche 1-3, dadurch gekennzeichnet, dass das rückgestreute Licht seitlich an der Fokussieroptik des Lichtstrahls vorbei beobachtet wird.

5. Verfahren nach einem der Ansprüche 1-3, dadurch gekennzeichnet, dass das rückgestreute Licht durch die Fokussieroptik hindurch beobachtet wird.

6. Verfahren nach einem der Ansprüche 1-5, dadurch gekennzeichnet, dass das rückgestreute Licht mit einem Fotoempfänger abgetastet und in entsprechende elektrische Signale umgewandelt wird, und dass diese Signale zur gegegebenenfalls automatischen Verstellung der Fokussierung ausgewertet werden.

7. Vorrichtung zur Durchführung des Verfahrens nach Anspruch 1, dadurch gekennzeichnet, dass ein Fotoempfänger (7) vorgesehen ist, der vom von der Oberfläche (1a) des Objekts (1) zurückgestreuten Licht (4) beaufschlagt wird, und dass der Fotoempfänger (7) an eine elektronische Auswerteeinrichtung (9) angeschlossen ist, welche ein der Grobheit der Granulierung des rückgestreuten Lichts entsprechendes Ausgangssignal erzeugt.

8. Vorrichtung nach Anspruch 7, dadurch gekennzeichnet, dass das Ausgangssignal optisch oder akustisch angezeigt wird (10).

9. Vorrichtung nach Anspruch 7 oder 8, dadurch gekennzeichnet, dass eine mit der Auswerteeinrichtung (9) zusammenarbeitende Regeleinrichtung (11) vorgesehen ist, welche die Fokussierung des Lichtstrahls auf maximale Grobheit der Granulierung des rückgestreuten Lichts einstellt.

10. Vorrichtung nach einem der Ansprüche 7-9, dadurch gekennzeichnet, dass der Fotoempfänger eine einzelne Fotodiode oder dgl. ist.

11. Vorrichtung nach einem der Ansprüche 7-9, dadurch gekennzeichnet, dass der Fotoempfänger eine lineare Anordnung von mehreren Fotodioden oder dgl. ist.

12. Vorrichtung nach einem der Ansprüche 6-8, dadurch gekennzeichnet, dass der Fotoempfänger eine zweidimensionale Anordung einer Vielzahl von Fotodioden oder dgl. oder eine Videokamera (7) ist.

13. Vorrichtung nach Anspruch 7, dadurch gekennzeichnet, dass die Auswerteeinrichtung (9) die der grössten Grobheit der Granulierung entsprechende Fokuseinstellung aus dem Verlauf der Grobheit rechnerisch ermittelt.

Fig. 1

Fig. 2

Fig.3

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 614 456 (BOSCH) <br><br> * Zusammenfassung * <br><br> --- | 1,4,5, 7,8 | B 23 K 26/04 |
| A | DE-A-1 915 459 (VEREINIGTE FLUGTECHNISCHE WERKE) <br><br> ----- | | |

|  |
|---|
| RECHERCHIERTE SACHGEBIETE (Int. Cl. ³) |
| B 23 K 26/00 |

Der vorliegende Recherchenbericht wurde für alle Patentansprüche erstellt

| Recherchenort <br> DEN HAAG | Abschlußdatum der Recherche <br> 17-05-1983 | Prüfer <br> HOORNAERT W. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82